# FASCICULE DE BREVET EUROPEEN

(11) **EP 3 747 518 B1**
(45) Date de publication et mention de la délivrance du brevet: **15.06.2022**
(21) Numéro de dépôt: 20178458.4
(22) Date de dépôt: 05.06.2020
(51) Int. Cl.: A63G 21/22, B61B 12/02

(54) **POULIE DOUBLE**
DOPPELTE RIEMENSCHEIBE
DOUBLE PULLEY

(30) Priorité: 06.06.2019 FR 1906051
(43) Date de publication de la demande: 09.12.2020
(73) Titulaire: Zedel, 38920 Crolles (FR)
(72) Inventeur: QUILLARD, Christophe, 38320 EYBENS (FR); VUILLERMOZ, Benoît, 38400 SAINT MARTIN D'HERES (FR)
(74) Mandataire: Talbot, Alexandre

(56) Documents cités:
- EP-A1- 1 386 814
- EP-B1- 1 386 814
- WO-A1-2011/078460
- DE-A1-102007 028 119
- US-A1- 2015 266 454
- US-A1- 2018 216 656

## Description

### Domaine technique

L'invention est relative à une poulie double.

### Technique antérieure

Dans de nombreux domaines, il est connu d'utiliser une poulie double qui doit se déplacer sur un câble. Par exemple, la poulie double est couramment utilisée lors de la réalisation de tyroliennes avec un utilisateur qui glisse le long du câble.

La poulie double possède deux réas qui sont montés à rotation. Le câble est installé à l'intérieur de la poulie en contact avec les deux réas. La poulie double possède un mousqueton qui sert à réaliser la connexion mécanique entre l'utilisateur suspendu à la poulie et le câble qui retient la poulie.

De manière classique, dans une tyrolienne, le câble est incliné et l'utilisateur réalise une chute contrôlée lors de sa glisse le long du câble. A l'extrémité du câble, l'utilisateur arrive à une zone d'arrêt qui est matérialisée par un obstacle sur le câble. La zone d'arrêt est classiquement pourvue d'un amortisseur déformable élastiquement et configuré pour absorber une partie de l'énergie procurée par la poulie lors de l'impact avec la poulie.

La poulie arrive en contact de la zone d'arrêt avec une vitesse qui peut être importante de sorte que la zone d'arrêt est percutée par la poulie double avec une énergie non négligeable. Il a été observé que lors de l'impact, la poulie ne peut plus se déplacer selon l'axe longitudinal du câble ce qui pousse la poulie à se cabrer car l'utilisateur est encore animé d'un mouvement selon l'axe longitudinal du câble. La poulie pivote par rapport à l'axe de rotation du réa arrière, c'est-à-dire le plus éloigné de la zone d'arrêt afin d'essayer de continuer à avancer le long du câble. Le réa avant perd le contact avec le câble.

Il en résulte une usure prématurée du frein formé dans la zone d'arrêt suite aux multiples glissements des poulies doubles qui frappent et glissent sur la zone d'arrêt. Il en résulte également une usure prématurée du réa arrière.

Une poulie double est connue du document US 6,810,818 de la demanderesse. Il existe également dans le commerce de multiples poulies doubles dont la poulie ZIP EVO commercialisée par la société KONG, la poulie WING2 commercialisée par la société CAMP, la poulie ZIPPEY commercialisée par la société ISC pour lesquelles la zone d'attache de l'utilisateur est monolithique avec l'étrier de la poulie. Pour ces différentes poulies, l'arrêt brutal de la poulie se traduit par la perte de contact entre le câble et le réa avant.

Pour réduire cette perte de contact, la poulie IMPACT commercialisée par la société HEADRUSH possède une zone d'attache du mousqueton qui se trouve le réa avant. Cette configuration impose un sens de roulement en obligeant l'utilisateur à se fixer sous le réa avant. Cette configuration permet d'éviter ou de réduire la rotation non volontaire de la poulie par rapport au câble. Cependant, cette configuration est spécifique ce qui impose son installation par un professionnel et ce dernier doit utiliser ces deux mains. La poulie EZ CLIP commercialisée par la société HEADRUSH possède également un mousqueton mobile en rotation par rapport à l'étrier. Là encore, il est nécessaire d'avoir ses deux mains pour installer la poulie sur le câble et se fixer à la poulie.

Le document DE 10 2007 028119 A1 traite d'une poulie double munie de deux réas associés à un corps avec deux jambes. La poulie est notamment destinée aux parcs d'attraction pour des descentes sur corde tendue. L'étrier définit deux ouvertures traversantes dont une est munie d'une douille en matériau élastique. Le matériau élastique forme une fente autorisant le passage d'un mousqueton. La douille en matériau élastique est montée encliquetable sur l'étrier et est configurée pour s'opposer à l'extraction accidentelle du mousqueton hors de l'étrier.

### Objet de l'invention

Un objet de l'invention consiste à prévoir une poulie double qui réduit voire élimine le pivotement de la poulie lorsqu'elle atteint la zone d'arrêt. A cet effet, la poulie double qui comporte :
- un étrier de support définissant un trou traversant,
- une paire de réas disposée en ligne à l'intérieur de l'étrier de support, chaque réa étant monté à rotation libre autour d'un arbre fixé à l'étrier de support,
- un mousqueton d'attache monté dans le trou traversant, le mousqueton d'attache étant monté à rotation autour d'un axe parallèle aux arbres de la paire de réas,
- un dispositif élastique connecté à l'étrier de support, le dispositif élastique étant agencé pour exercer une force sur le mousqueton d'attache et amener le mousqueton d'attache vers une position de repos par rotation du mousqueton d'attache.

Préférentiellement, chaque réa est configuré pour pivoter autour d'un axe de rotation, les axes de rotation des réas et l'axe de rotation du mousqueton d'attache appartenant sensiblement à un même plan.

Selon un développement de l'invention, le mousqueton d'attache comporte un corps définissant un méplat, le dispositif élastique exerçant un effort sur le méplat pour ramener le mousqueton d'attache dans la position de repos.

De manière avantageuse, le dispositif élastique est disposé d'un côté du plan, le mousqueton d'attache possédant un doigt mobile étant disposé de l'autre côté du plan.

Selon un autre développement, le mousqueton d'attache définit une première zone saillante qui forme une première butée de fin de course appuyant sur une aile de l'étrier de support lors de la rotation du mousqueton d'attache depuis la position de repos selon un premier sens de rotation.

Avantageusement, le mousqueton d'attache définit une seconde zone saillante qui forme une seconde butée de fin de course lors de la rotation du mousqueton d'attache depuis la position de repos.

De manière préférentielle, la première zone saillante et la seconde zone saillante sont séparées par le méplat selon l'axe de rotation du mousqueton d'attache.

Dans un mode de réalisation particulier, la première zone saillante et/ou la deuxième zone saillante coopèrent avec un bloqueur pour bloquer un déplacement du mousqueton d'attache perpendiculairement au plan contenant les deux axes de rotation de la paire de réas.

Il est également avantageux de prévoir que le dispositif élastique applique un effort sur le mousqueton d'attache qui est supérieur au poids de l'étrier de support.

Préférentiellement, une longe est fixée au mousqueton d'attache.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
la figure 1 illustre, de manière schématique, une poulie double avec mousqueton fermé ;
la figure 2 représente de manière schématique une poulie double avec mousqueton ouvert ;
la figure 3 représente de manière schématique en coupe transversale une poulie double avec mousqueton fermé selon le plan AA,
la figure 4 représente de manière schématique en coupe longitudinale une poulie double, le mousqueton étant dans la position de repos selon le plan BB,
la figure 5 représente de manière schématique en coupe longitudinale une poulie double avec son mousqueton décalé selon le plan BB,
la figure 6 représente de manière schématique en coupe longitudinale une poulie double, le mousqueton étant dans la position de repos selon le plan CC,
la figure 7 représente de manière schématique en coupe longitudinale une poulie double avec son mousqueton décalé selon le plan CC.

### Description des modes de réalisation

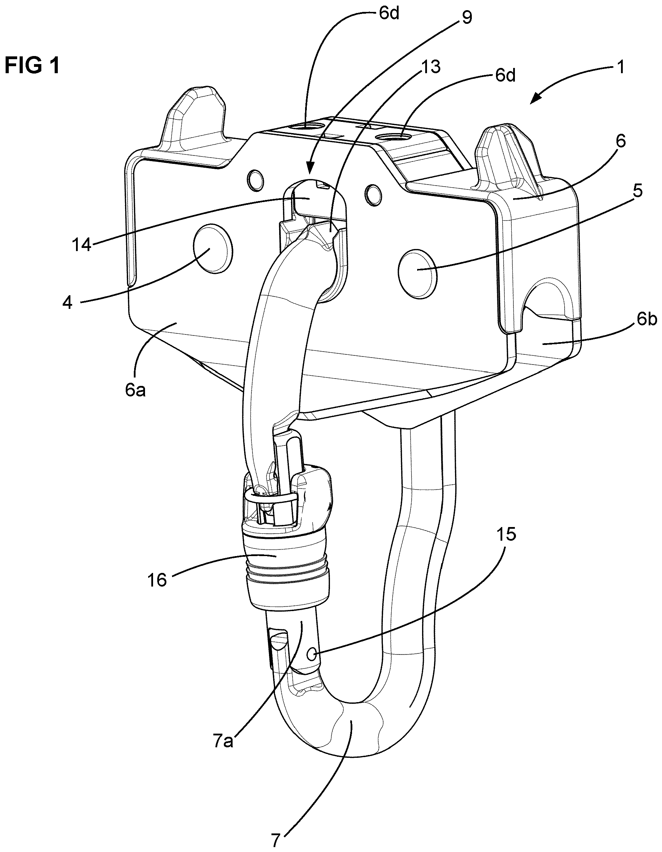

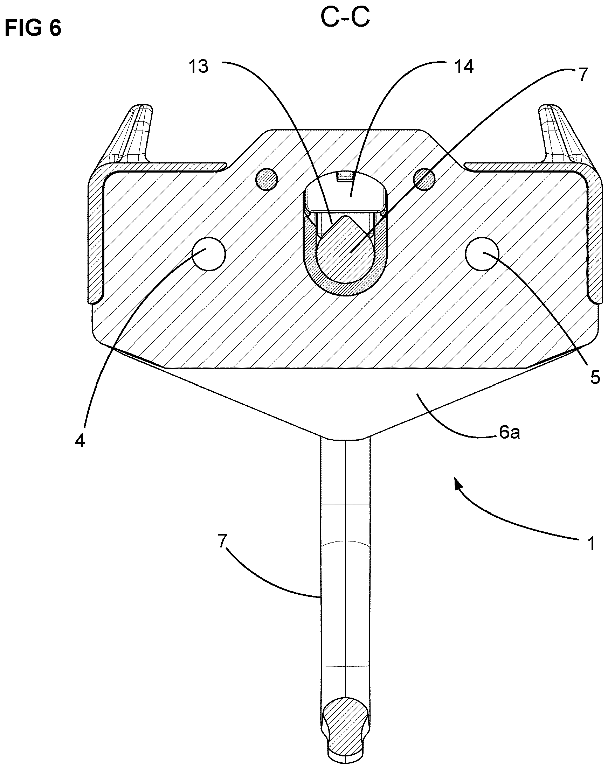

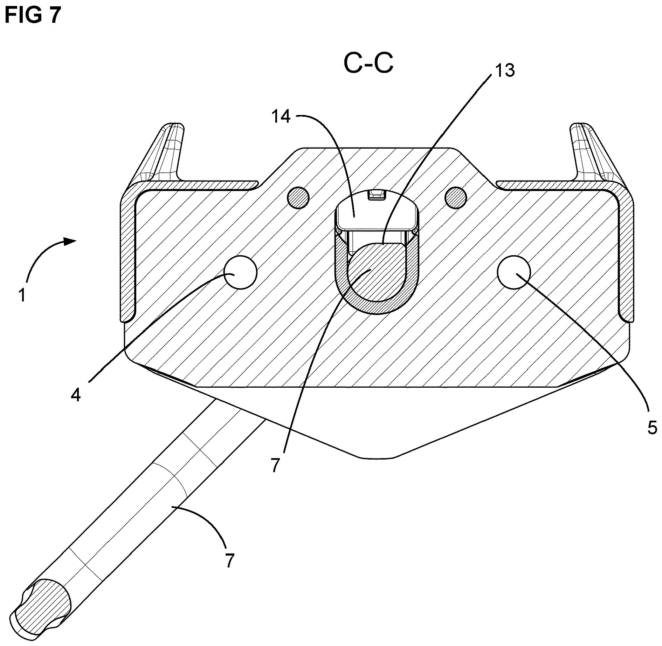

Comme illustré sur les figures 1 à 7, un dispositif de poulie double 1 comporte une paire de réas 2, 3 qui sont avantageusement de structures identiques. La paire de réas 2, 3 est montée en ligne. Chaque réa 2, 3 est monté à rotation libre sur un arbre 4, 5. Les deux arbres 4, 5 sont fixés sur un étrier de support 6. L'étrier de support 6 est avantageusement en forme de U renversé. L'étrier de support 6 peut être un étrier de support métallique. L'étrier de support peut être formé par une tôle déformée pour définir un U ou sensiblement un U. L'étrier de support peut être réalisé par un assemblage de plusieurs éléments et par exemple des premier et second flasques.

Un tel dispositif est avantageusement utilisé pour le transport aérien d'une personne lors d'un passage en tyrolienne sur une corde ou un câble d'assurance (non représenté). La poulie double glisse le long d'un câble qui est fixe.

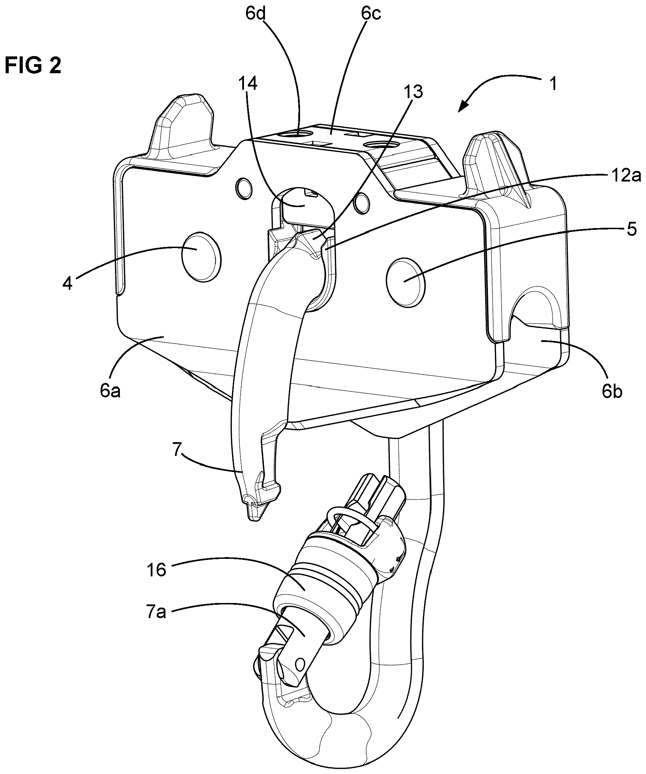

Comme illustré aux figures 1 et 2, l'étrier de support 6 définit un trou traversant qui est un trou d'introduction pour un mousqueton d'attache 7. Le mousqueton d'attache 7 passe au travers de l'étrier de support 6 ce qui définit la connexion mécanique entre le mousqueton d'attache 7 et le câble. Le mousqueton d'attache 7 est monté dans le trou traversant pour définir la connexion mécanique entre l'utilisateur et le câble. Lorsque l'utilisateur est suspendu au moyen du mousqueton d'attache 7, le mousqueton 7 appuie sur l'étrier de support qui est retenu par le câble.

Les deux réas 2, 3 sont montés mobiles en rotation au moyen de deux arbres de rotation 4, 5. Les deux arbres de rotation 4, 5 sont installés parallèlement l'un par rapport à l'autre. Les deux arbres de rotation 4, 5 définissent deux axes de rotation différents. Les deux axes de rotation appartiennent à un même plan qui divise chaque réa en deux parties égales. De manière avantageuse, les deux réas 2, 3 sont montés fixes sur l'étrier 6.

Dans un mode de réalisation particulier, l'étrier 6 possède deux ailes opposées 6a, 6b. Les deux arbres 4, 5 sont avantageusement montés fixes sur les deux ailes 6a, 6b.

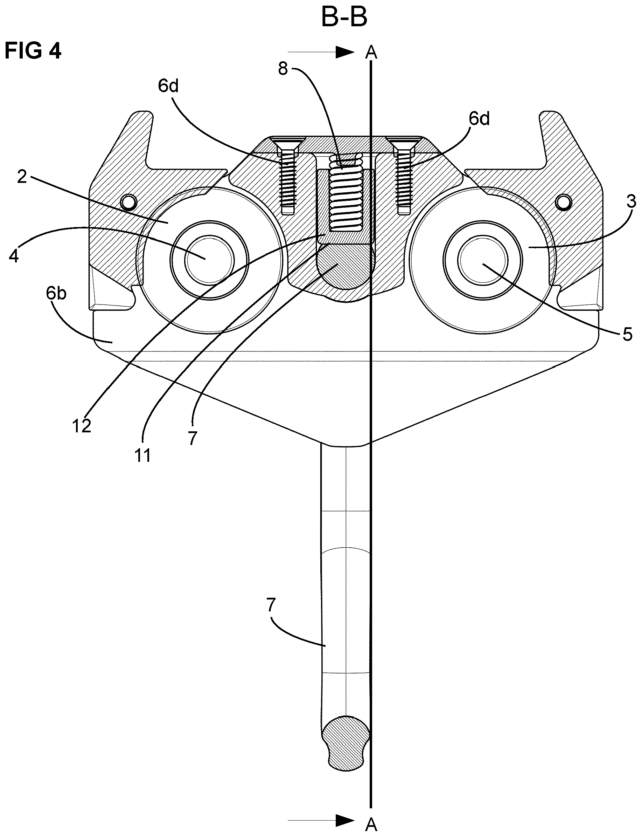

Comme illustré aux figures 4, 5, 6 et 7, le mousqueton d'attache 7 est monté mobile en pivotement ce qui permet de modifier la connexion mécanique qui existe entre l'utilisateur et le câble et notamment lors des phases de décélération et plus particulièrement lorsque l'extrémité de la poulie double 1 atteint la zone d'arrêt du câble. La rotation du mousqueton d'attache 7 permet lors de la décélération de la poulie double de réduire voire d'éviter la rotation de la poulie par rapport à l'arbre de rotation du réa arrière. Le mousqueton d'attache 7 et l'étrier de support 6 sont configurés pour autoriser un rotation du mousqueton d'attache 7 vers la partie avant de la poulie lorsque cette dernière se déplace. Lors de la rotation de la poulie, l'extrémité inférieure du mousqueton d'attache 7 se rapproche de l'extrémité avant de la poulie. L'extrémité supérieure du mousqueton d'attache est montée dans l'étrier 6.

Il ressort qu'à l'usage, l'utilisation d'un mousqueton d'attache 7 mobile par rapport à l'étrier 6 n'est pas très pratique. Les poulies sont principalement utilisées par des personnes qui ne sont expertes dans le maniement de la poulie. Quand le mousqueton 7 est monté librement rotatif par rapport au support 6, il ressort que l'étrier 6 tourne sous l'effet de son poids lorsque la poulie doit être installée sur le câble quand elle est maintenue par le mousqueton.

De manière classique, le mousqueton 7 possède un doigt mobile 7a qui permet l'insertion du câble dans le mousqueton 7 ou l'extraction du câble hors du mousqueton 7. Le doigt mobile 7a est monté pivotant autour d'un axe qui est sensiblement parallèle à l'axe du câble dans les deux réas. Pour insérer ou extraire le câble, l'utilisateur doit ouvrir le mousqueton, ce qui nécessite de contraindre le doigt et donc d'avoir une bonne préhension sur le mousqueton. Avec un mousqueton 7 monté à rotation libre par rapport à l'étrier 6, l'étrier 6 tourne lors des phase d'insertion et d'extraction ce qui rend cette opération plus compliquée. L'utilisateur est obligé d'utiliser ses deux mains. La première main tient le mousqueton et la deuxième main tient l'étrier.

Afin de faciliter l'utilisation de la poulie double, un ressort 8 est connecté à l'étrier de support 6 et le ressort 8 est configuré pour appliquer un effort sur le mousqueton d'attache 7. L'effort appliqué par le ressort 8 est configuré pour ramener le mousqueton d'attache 7 vers une position de repos et limiter ou empêcher la rotation entre le mousqueton d'attache 7 et l'étrier de support 6 en dessous de l'application d'un effort seuil. Lorsque l'utilisateur tient la poulie double au moyen du mousqueton 7, le ressort 8 empêche la rotation de l'étrier par rapport au mousqueton. La valeur de l'effort seuil est avantageusement supérieure ou égale au poids de l'étrier 6. Par ressort on entend un dispositif élastique, c'est-à-dire un dispositif que se déforme élastiquement depuis sa position de repos lorsqu'il est soumis à un effort et qui retourne dans la position de repos après disparition de l'effort. Le dispositif élastique peut être un ressort hélicoïdal actionné en compression ou en traction, un ressort hélicoïdal actionné en torsion ou tout autre élément capable de se déformer élastiquement. Le dispositif élastique peut être réalisé en métal ou en matériau plastique, par exemple en élastomère.

Lorsque l'utilisateur manipule la poulie double 1 en la tenant par le mousqueton d'attache, l'étrier 6 est immobile par rapport au mousqueton d'attache 7. Lorsque l'utilisateur est suspendu dans le mousqueton d'attache 7 et que la poulie décélère plus rapidement que l'utilisateur, l'effort appliqué par l'utilisateur est supérieur à l'effort seuil et le mousqueton d'attache 7 contraint le ressort 8 qui essaye de s'opposer à la rotation du mousqueton 7. Le pivotement du mousqueton 7 permet d'éviter ou de réduire la rotation de la poulie par rapport au câble. Les deux réas restent plus longtemps en contact du câble.

Une fois la poulie double 1 à l'arrêt ou quasiment à l'arrêt, l'effort appliqué par le ressort redevient supérieur à l'effort appliqué par l'utilisateur ce qui replace le mousqueton dans la position de repos. De cette manière, lors de la décélération de la poulie 1, le mousqueton 7 tourne afin de suivre l'inertie de l'utilisateur suspendu dans le mousqueton 7 jusqu'à ce que ce dernier s'immobilise. Une fois que la vitesse de l'utilisateur par rapport au câble devient faible ou nulle, le mousqueton revient dans sa position de repos car le ressort applique une contrainte suffisante. L'utilisateur peut alors manœuvrer la poulie double 1 en n'utilisant que le mousqueton 7.

Le ressort 8 permet, de manière passive, de ramener le mousqueton d'attache 7 dans la position de repos, c'est-à-dire sans intervention de l'utilisateur.

Afin d'augmenter la sécurité, il est particulièrement avantageux de prévoir que l'étrier de support 6 et le mousqueton 7 soient conformés de manière à empêcher l'ouverture du mousqueton 7 lorsque le mousqueton 7 n'est pas dans la position de repos ou à plus de 20° par rapport à la position de repos. Cette configuration peut être obtenue en utilisant un étrier 6 dont l'encombrement d'une des ailes 6 évolue lors de sa rotation depuis la position de repos. De cette manière, au delà d'une position seuil, l'aile 6a empêche l'ouverture du doigt 7a du mousqueton 7. Cette configuration permet de détecter plus rapidement un vieillissement du ressort 8 qui n'est plus en mesure de ramener le mousqueton 7 dans la position de repos.

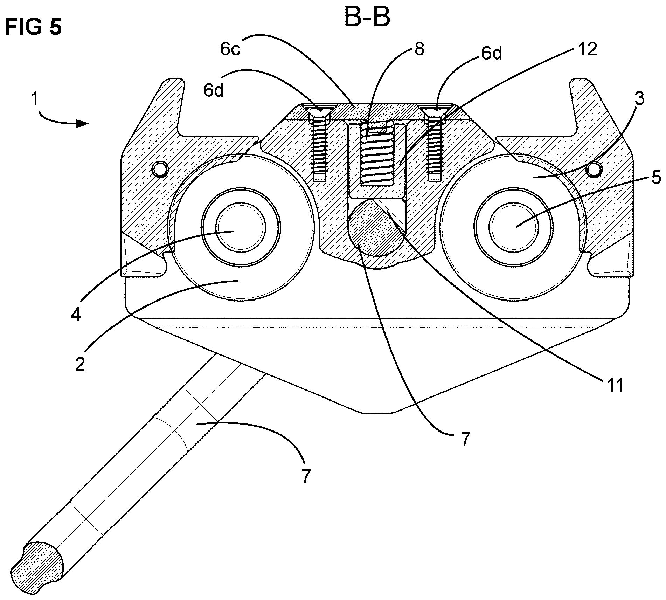

Dans un mode de réalisation avantageux illustré aux figures 4 et 5, chaque réa 2, 3 est configuré pour pivoter autour d'un axe de rotation. Les axes de rotation des réas 2, 3 et l'axe de rotation du mousqueton d'attache 7 appartiennent à un même plan. Cette configuration permet d'avoir tous les axes de rotation dans un même plan lors de la phase de décélération. Cette configuration améliore la stabilité de la poulie 1 montée sur le câble. Dans une configuration alternative, l'axe de rotation du mousqueton se trouve au-dessus du plan qui contient les axes de rotation des deux réas.

L'axe de rotation du mousqueton se trouve entre les deux réas de préférence à équidistance entre les deux réas. Une telle configuration permet de mieux contrôler l'usure des réas et faciliter le fonctionnement de la poulie double indépendamment du sens de progression le long du câble.

Préférentiellement, l'étrier 6 comporte une paire d'ailes 6a, 6b parallèles ou sensiblement parallèles. Les ailes 6a, 6b sont séparées par les réas 2, 3 et avantageusement par le ressort 8. Chaque aille 6a, 6b définit une orifice 9, 10 et les deux orifices 9, 10 sont alignés selon un axe parallèle à l'axe de rotation des réas 2, 3.

Le mousqueton d'attache 7 est introduit dans la paire d'orifices 9, 10. Le diamètre de chaque réa 2, 3 est choisi de sorte que le point de contact du mousqueton 7 sur l'étrier 6 soit disposé au-dessus du point de contact des réas 2, 3 sur le câble. En fonctionnement, l'utilisateur est suspendu par le mousqueton 7 et la poulie double 1 est posée sur le câble, la reprise d'effort du mousqueton 7 sur l'étrier 6 sur trouve au dessus du plan horizontal ou sensiblement horizontal qui comporte les deux points de contact entre le câble et les réas 2, 3.

De manière avantageuse, le mousqueton d'attache 7 comporte un corps qui définit un méplat 11. Le ressort 8 exerce un effort sur le méplat 11. L'effort exercé sur le méplat 11 déplace le mousqueton 7 vers la position de repos. L'utilisation d'un méplat 11 dans le corps du mousqueton 7 permet de réaliser facilement un corps qui n'est pas à section circulaire et qui interagit efficacement avec le ressort 8. De manière avantageuse, le ressort 8 est terminé par un connecteur 12 qui définit une zone de contact plane. La zone de contact plane vient en contact du méplat 11. Le ressort 8 tend à atteindre la position de repos en mettant en contact les deux surfaces planes l'une sur l'autre. Cette configuration permet de former un corps solide et efficace pour ramener le mousqueton 7 dans la position de repos. La configuration proposée est particulièrement avantageuse car elle permet simplement de contraindre le corps du mousqueton 7.

Dans un mode de réalisation particulier, le ressort 8 est disposé d'un côté du plan défini par les axes de rotation des réas. Le mousqueton d'attache 7 est majoritairement disposé de l'autre côté du plan avec notamment le doigt mobile 7a et le point de fixation entre le mousqueton 7 et l'utilisateur. Avec une telle configuration, lorsque l'utilisateur est suspendu dans le mousqueton 7, l'utilisateur n'applique aucune contrainte supplémentaire sur le ressort 8. En d'autres termes, le poids de l'utilisateur n'est pas appliqué sur le ressort 8. Cela permet d'utiliser un ressort 8 ayant une raideur limitée car la raideur est utilisée pour ramener le mousqueton 7 dans la position de repos. Lorsque l'utilisateur est suspendu par le mousqueton 7 et qu'il se déplace par rapport à la poulie, le mousqueton 7 peut pivoter.

De manière avantageuse, la poulie double possède un organe d'interface 12a qui est disposé entre l'étrier 6 et le mousqueton 7 et préférentiellement entre les ailes 6a, 6b et le mousqueton 7. Lorsque les ailes 6a, 6b et le mousqueton 7 sont réalisés en matériau métallique, il est avantageux d'utiliser un organe d'interface en matériau plastique qui va éviter un contact direct entre les deux matériaux métalliques. Il est avantageux de prévoir que l'organe d'interface soit monté fixe par rapport à l'étrier 6 de manière à avoir uniquement la rotation du mousqueton 7 par rapport l'organe d'interface.

Dans le mode de réalisation illustré, le ressort 8 est comprimé par le corps 7 lorsqu'il s'éloigne de la position de repos dans les deux sens de sollicitation. Il est également possible de prévoir que le ressort 8 soit sollicité en traction même si ce mode de réalisation est moins intéressant.

Il est également possible de prévoir l'utilisation de plusieurs ressorts, par exemple sous la forment d'éléments élastiques, qui appliquent des efforts opposés pour définir la position de repos. L'effort appliqué par l'utilisateur suspendu dans le mousqueton vient modifier la répartition des efforts de sorte que le mousqueton tourne. Cette configuration est moins avantageuse.

Il est également préférable de prévoir que le mousqueton d'attache 7 définisse une première zone saillante 13 qui forme une première butée de fin de course lors de la rotation du mousqueton d'attache 7 depuis la position de repos. La première zone saillante 13 forme une butée de fin de course lors d'un déplacement selon un premier sens de rotation qui correspond au sens de déplacement lors de la décélération de la poulie double, c'est-à-dire un déplacement qui rapproche le doigt d'ouverture 7a vers le réa avant de la poulie. La butée de fin de course permet de limiter l'écart angulaire par rapport à la position de repos.

La première zone saillante 13 forme une butée de fin de course qui limite la rotation du mousqueton 7 et empêche le mousqueton de toucher le câble ou de remonter trop haut lors de la décélération de la poulie ce qui peut être préjudiciable à la sécurité de l'utilisateur. Limiter la rotation du mousqueton permet d'assurer un bon contact entre le câble les réas.

Lorsque qu'un méplat est utilisé, la butée de fin de course est avantageusement configurée pour empêcher que le mousqueton tourne au-delà du méplat 11, c'est-à-dire pour que le ressort 8 appuie toujours sur une extrémité du méplat pour ramener le mousqueton dans la position de repos.

De manière avantageuse, la butée de fin de course est configurée pour limiter la rotation du mousqueton depuis la position de repos d'une valeur inférieure à 45°C et préférentiellement inférieure à 30°C.

De manière avantageuse, la première zone saillante 13 n'intervient pas dans l'application de la force de rappel qui ramène le mousqueton 7 vers la position de repos. Préférentiellement, la première zone saillante 13 limite la rotation du mousqueton 7 en venant en contact d'une des ailes de l'étrier 6. Le contact entre la partie saillante et l'aile peut être directe ou la partie saillante peut venir en appui sur le l'organe d'interface 12a qui est lui même en appui sur l'aile de l'étrier 6.

Cette configuration est particulièrement avantageuse car la partie saillante 13 appuie sur l'aile de l'étrier qui ce permet de supporter des efforts importants sans solliciter le ressort 8 de manière exagérée. Une fois que la partie saillante 13 est entrée en contact du de l'organe d'interface 12a ou de l'aile, le mousqueton 7 stoppe sa rotation et les efforts appliqués par le mousqueton 7 ne sont pas transmis au ressort 8.

Il est particulièrement avantageux de prévoir que le corps du mousqueton 7 possède une deuxième partie saillante qui intervient également dans la limitation de la rotation du mousqueton 7 par rapport à l'étrier 6.

Dans le mode de réalisation illustré, les deux parties saillantes 13 sont séparées de manière à venir en contact des deux ailes opposées de l'étrier 6. Les deux parties saillantes 13 sont identiques ou sensiblement identiques dans le sens où elles viennent simultanément arrêter la rotation du corps. Cette configuration est particulièrement avantageuse car deux forces s'opposent à la rotation du mousqueton de part et d'autre du ressort 8 ce qui évite ou diminue la rotation du corps selon un axe qui n'est pas parallèle aux axes de rotation des réas.

Préférentiellement, les deux parties saillantes 13 présentent la même forme.

Il est avantageux de prévoir que l'organe d'interface 12a s'étende au delà des ailes 6a, 6b selon l'axe de rotation des réas 2, 3 car cela permet d'augmenter la surface contact entre les parties saillantes 13 et le mousqueton 7. Il est alors possible de mieux maitriser la rotation du mousqueton 7 lorsque le mousqueton 7 arrive en fin de course.

Afin de mieux maitriser la rotation du mousqueton 7 par rapport à l'étrier 6, il est avantageux de prévoir que le corps définisse une zone rectiligne dont la longueur est supérieure ou égale à l'épaisseur de l'étrier 6, c'est-à-dire la dimension selon l'axe de rotation des réas. La zone rectiligne forme l'arbre de rotation du mousqueton. La zone rectiligne est opposée à la zone de fixation de l'utilisateur. De manière avantageuse, le grand axe du mousqueton, la distance interne rectiligne maximale du mousqueton est perpendiculaire à l'axe de rotation.

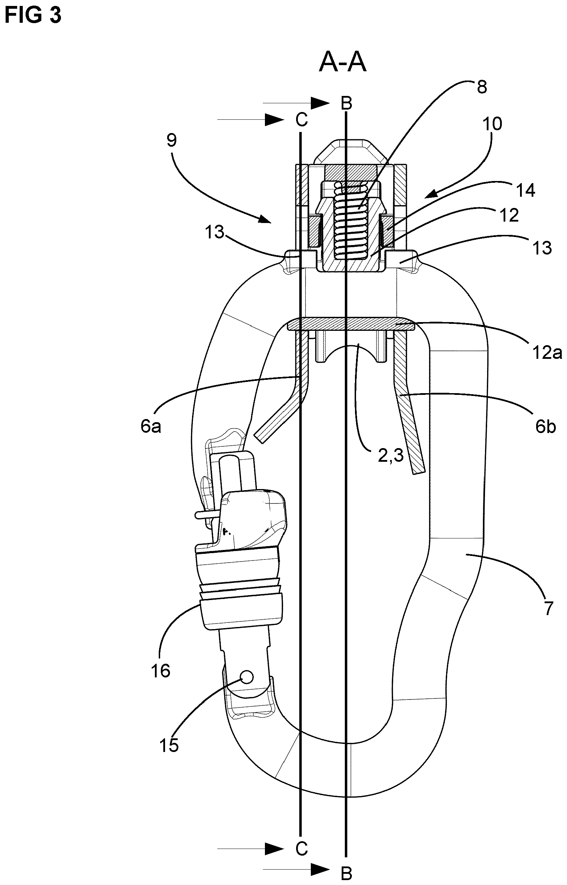

Comme illustré aux figures 3, 4 et 5, lors de la rotation du mousqueton 7, la valeur de surface de contact entre l'étrier 6 et le mousqueton 7 est constante ou sensiblement constante. Il est alors plus facile d'avoir uniquement une rotation du mousqueton 7 par rapport à l'étrier 6. De manière avantageuse, le corps du mousqueton est à section circulaire avec un méplat.

Le corps du mousqueton 7 interagit avec le ressort 8 de sorte qu'il est possible d'avoir un soulèvement du mousqueton par rapport à l'étrier 6 ce qui pourrait être préjudiciable au bon fonctionnement de la poulie. Il est particulièrement avantageux de prévoir que l'organe d'interface 12a possède un bloqueur 14 qui est monté de manière à bloquer un déplacement du mousqueton 7 perpendiculairement au plan contenant les deux axes de rotation des réas 2, 3. Le bloqueur 14 peut être agencé pour empêcher le déplacement du mousqueton 7 sur une distance supérieure ou égale à 0,5cm. De préférence, le déplacement du mousqueton 7 est inférieur ou égal à 0,3cm. Préférentiellement, le bloqueur 14 vient en contact de la par partie saillante et de préférence des deux parties saillantes.

Dans le mode de réalisation illustré, un réceptacle est aménagé dans l'étrier de support 6. Le ressort 8 est installé dans le réceptacle. Le réceptacle est refermé par un capot 6c. Le capot 6c peut être maintenu en position au moyen d'un ou de plusieurs éléments de fixation 6d démontables ou non, par exemple des vis ou des rivets. Il est avantageux de prévoir que le ressort 8 vienne en appui du capot pour appliquer la contrainte sur le corps.

Les deux orifices aménagés dans les ailes de l'étrier 6 sont avantageusement plus grands que la section du corps du mousqueton 7 destiné à pivoter dans l'étrier 6. De cette manière, il est possible d'installer et de retirer facilement le corps en faisant coulisser le mousqueton 7.

L'installation du ressort 8 et avantageusement du bloqueur 14 permet d'empêcher le coulissement du mousqueton 7 et de le contraindre à un seul mouvement de pivotement autour d'un axe parallèle à l'axe de rotation des réas 2, 3.

Dans la configuration illustrée, la partie saillante 13 forme également une butée de fin de course qui limite la rotation du mousqueton 7 lorsque ce dernier pivote selon l'autre sens de rotation. La configuration proposée permet une utilisation de la poulie 1 dans les deux sens, c'est-à-dire que la poulie 1 peut être utilisée avec la main droite ou avec la main gauche sans que cela modifie le fonctionnement de la poulie double 1.

Avantageusement, l'aile 6a qui est située du côté du doigt mobile 7a du mousqueton 7, est plus courte que l'autre aile 6b. L'aile 6b peut être configurée pour interdire l'ouverture du doigt 7a vers l'intérieur du mousqueton lors de la mise en place du dispositif à poulie double 1 sur le câble. Cette configuration permet de définir le sens de montage du mousqueton 7. Seule l'aile 6a peut autoriser l'ouverture du doigt 7a du mousqueton 7. Dans une alternative de réalisation non illustrée, l'aile 6a définit une zone arrondie dont le centre se situe sur l'axe de rotation du mousqueton 7. La zone arrondie suit la position du doigt 7 du mousqueton afin d'autoriser l'ouverture du mousqueton dans toutes les positions du mousqueton lors de la rotation du mousqueton. Cette configuration permet de réduire le risque de pincement des doigts de l'utilisateur lorsque le mousqueton 7 tourne et que l'utilisateur agrippe le mousqueton 7.

Le doigt 7a est monté à pivotement sur un axe 15 du corps de mousqueton 7, et est sollicité vers la position de fermeture par un ressort de rappel. Il est équipé avantageusement d'une bague de verrouillage 16 (figure 2) pour verrouiller le doigt 7a en position de fermeture pendant l'utilisation.

De manière avantageuse, les parties inférieures des deux ailes 6a, 6b de l'étrier 6 sont recourbées vers l'extérieur, pour former un entonnoir permettant l'introduction rapide du câble sur les réas 2, 3. Le bout de l'aile 6b est agencé en butée pour assurer le positionnement stable du mousqueton 7 dans une position verticale perpendiculaire à l'étrier 6.

Préférentiellement, les réas 2, 3 sont en acier inoxydable ou en aluminium, et peuvent être montés à rotation sur des roulements à billes ou des coussinets autolubrifiants.

La poulie double 1 est destinée à se déplacer par rapport à un câble avec un utilisateur suspendu au mousqueton 7. L'utilisateur peut être suspendu au moyen d'une longe qui assure la connexion mécanique entre l'utilisateur et le mousqueton 7. La longe se trouve dans la partie inférieure de la poulie, c'est-à-dire sous le plan qui contient les deux axes de rotation des réas. La longe peut est réalisée au moyen d'une corde ou d'une sangle.

En évitant la rotation de la poulie double autour de l'axe de l'arbre du réa arrière, il est possible d'éviter l'usure préférentielle du réa arrière par rapport au réa avant. Le mousqueton peut être démontable ce qui facilite son changement en cas de défaillance.

Comme le ressort 8 plaque le mousqueton 7 contre l'étrier 6, le mouvement du mousqueton 7 est mieux maitrisé. Le mousqueton réalise une rotation et de préférence une rotation à l'intérieur d'une pièce en plastique. L'usure du mousqueton et l'usure des orifices aménagées dans les ailes sont mieux maitrisées.

La mise en œuvre du dispositif de poulie double 1 sur le câble s'effectue de la manière suivante. L'utilisateur tient la poulie double 1 au moyen du mousqueton 7 et ouvre le doigt mobile 7a. Le ressort 8 fixe le mousqueton 7 dans la position de repos par rapport à l'étrier 6. L'étrier 6 apparaît comme mobile par rapport au mousqueton 7 lors de l'étape d'introduction du câble dans le mousqueton 7 car le ressort 8 applique un effort qui est supérieur à l'effort appliqué par le poids de l'étrier 6 pour causer sa rotation par rapport au mousqueton 7.

Le câble vient en engagement sur les points de contact des réas 2, 3. Une fois le mousqueton 7 refermé, le câble est verrouillé dans le mousqueton 7. Après la phase de descente le long du câble, lors d'une phase de décélération où l'utilisateur décélère après la poulie double 1, le mousqueton 7 pivote vers l'avant ce qui permet un meilleur contact du câble avec les deux réas durant toute la décélération.

Après la phase de décélération, le ressort 8 applique un effort suffisant pour ramener le mousqueton 7 dans la position de repos. L'utilisateur peut manipuler la poulie double 1 pour extraire le câble en utilisant le mousqueton 7 comme cela a été fait pour l'introduction du câble.

## Revendications

1. Poulie double (1) comprenant :
- un étrier de support (6) définissant un trou traversant,
- une paire de réas (2, 3) disposée en ligne à l'intérieur de l'étrier de support (6), chaque réa (2, 3) étant monté à rotation libre autour d'un arbre (4, 5) fixé à l'étrier de support (6),
- un mousqueton d'attache (7) monté dans le trou traversant, le mousqueton d'attache (7) étant monté à rotation autour d'un axe parallèle aux arbres (4, 5) de la paire de réas (2, 3), **caractérisée en ce qu'**elle comprend :
- un dispositif élastique (8) connecté à l'étrier de support (6), le dispositif élastique (8) étant agencé pour exercer une force sur le mousqueton d'attache (7) et amener le mousqueton d'attache (7) vers une position de repos par rotation du mousqueton d'attache (7).

2. Poulie double (1) selon la revendication 1, dans laquelle chaque réa (2, 3) est configuré pour pivoter autour d'un axe de rotation, les axes de rotation des réas et l'axe de rotation du mousqueton d'attache (7) appartenant sensiblement à un même plan.

3. Poulie double (1) selon la revendication 2, dans laquelle le mousqueton d'attache (7) comporte un corps définissant un méplat (11), le dispositif élastique (8) exerçant un effort sur le méplat (11) pour ramener le mousqueton d'attache (7) dans la position de repos.

4. Poulie double (1) selon la revendication 3, dans laquelle le dispositif élastique (8) est disposé d'un côté du plan, le mousqueton d'attache (7) possédant un doigt mobile disposé de l'autre côté du plan.

5. Poulie double (1) selon l'une des revendications précédentes, dans laquelle le mousqueton d'attache (7) définit une première zone saillante (13) qui forme une première butée de fin de course appuyant sur une aile de l'étrier de support (6) lors de la rotation du mousqueton d'attache (7) depuis la position de repos selon un premier sens de rotation.

6. Poulie double (1) selon la revendication précédente, dans laquelle le mousqueton d'attache (7) définit une seconde zone saillante (13) qui forme une seconde butée de fin de course lors de la rotation du mousqueton d'attache (7) depuis la position de repos.

7. Poulie double selon la revendication précédente en combinaison avec la revendication 3, dans laquelle la première zone saillante (13) et la seconde zone saillante (13) sont séparées par le méplat selon l'axe de rotation du mousqueton d'attache (7).

8. Poulie double selon la revendication précédente, dans laquelle la première zone saillante (13) et/ou la deuxième zone saillante (13) coopèrent avec un bloqueur (14) pour bloquer un déplacement du mousqueton d'attache (7) perpendiculairement au plan contenant les deux axes de rotation de la paire de réas (2, 3).

9. Poulie double selon l'une des revendications précédentes, dans laquelle le dispositif élastique (8) applique un effort sur le mousqueton d'attache (7) qui est supérieur au poids de l'étrier de support (6).

10. Poulie double selon l'une des revendications précédentes, dans laquelle une longe est fixée au mousqueton d'attache (7).

## Patentansprüche

1. Doppelte Seilrolle (1), umfassend:
- einen Haltebügel (6), der ein Durchgangsloch definiert,
- ein Paar Seilscheiben (2, 3), die im Inneren des Haltebügels (6) in Reihe angeordnet sind, wobei jede Seilscheibe (2, 3) um eine am Haltebügel (6) befestigte Welle (4, 5) frei drehbar angebracht ist,
- einen Befestigungskarabiner (7), der im Durchgangsloch angebracht ist, wobei der Befestigungskarabiner (7) um eine Achse parallel zu den Wellen (4, 5) des Paars Seilscheiben (2, 3) drehbar angebracht ist, **dadurch gekennzeichnet, dass** sie umfasst:
- eine elastische Vorrichtung (8), die mit dem Haltebügel (6) verbunden ist, wobei die elastische Vorrichtung (8) angeordnet ist, um auf den Befestigungskarabiner (7) eine Kraft auszuüben und den Befestigungskarabiner (7) durch Drehen des Befestigungskarabiners (7) in eine Ruhestellung zu bringen.

2. Doppelte Seilrolle (1) nach Anspruch 1, wobei jede Seilscheibe (2, 3) dazu konfiguriert ist, sich um eine Drehachse zu drehen, wobei die Drehachsen der Seilscheiben und die Drehachse des Befestigungskarabiners (7) im Wesentlichen auf einer selben Ebene liegen.

3. Doppelte Seilrolle (1) nach Anspruch 2, wobei der Befestigungskarabiner (7) einen Körper aufweist, der eine Abflachung (11) definiert, wobei die elastische Vorrichtung (8) auf die Abflachung (11) eine Kraft ausübt, um den Befestigungskarabiner (7) in die Ruhestellung zurückzubringen.

4. Doppelte Seilrolle (1) nach Anspruch 3, wobei die elastische Vorrichtung (8) auf einer Seite der Ebene angeordnet ist, wobei der Befestigungskarabiner (7) einen beweglichen Finger aufweist, der auf der anderen Seite der Ebene angeordnet ist.

5. Doppelte Seilrolle (1) nach einem der vorherigen Ansprüche, wobei der Befestigungskarabiner (7) einen ersten vorspringenden Bereich (13) definiert, der einen ersten Endanschlag bildet, der bei der Drehung des Befestigungskarabiners (7) aus der Ruhestellung in eine erste Drehrichtung auf einem Flügel des Haltebügels (6) aufliegt.

6. Doppelte Seilrolle (1) nach dem vorherigen Anspruch, wobei der Befestigungskarabiner (7) einen zweiten vorspringenden Bereich (13) definiert, der bei der Drehung des Befestigungskarabiners (7) aus der Ruhestellung einen zweiten Endanschlag bildet.

7. Doppelte Seilrolle nach dem vorherigen Anspruch in Kombination mit Anspruch 3, wobei der erste vorspringende Bereich (13) und der zweite vorspringende Bereich (13) durch die Abflachung entlang der Drehachse des Befestigungskarabiners (7) voneinander getrennt sind.

8. Doppelte Seilrolle nach dem vorherigen Anspruch, wobei der erste vorspringende Bereich (13) und/oder der zweite vorspringende Bereich (13) mit einer Sperrvorrichtung (14) zusammenwirken, um eine Bewegung des Befestigungskarabiners (7) senkrecht zu der Ebene, welche die zwei Drehachsen des Paars Seilscheiben (2, 3) enthält, zu blockieren.

9. Doppelte Seilrolle nach einem der vorherigen Ansprüche, wobei die elastische Vorrichtung (8) auf den Befestigungskarabiner (7) eine Kraft ausübt, die größer ist als das Gewicht des Haltebügels (6).

10. Doppelte Seilrolle nach einem der vorherigen Ansprüche, wobei eine Leine am Befestigungskarabiner (7) befestigt ist.

## Claims

1. Tandem pulley (1) comprising:
- a support bracket (6) defining a through hole,
- a pair of sheaves (2, 3) arranged in line inside the support bracket (6), each sheave (2, 3) being fitted rotating freely around a spindle (4, 5) fixed to the support bracket (6),
- an attaching carabiner (7) fitted in the through hole, the attaching carabiner (7) being fitted rotating around an axis parallel to the spindles (4, 5) of the pair of sheaves (2, 3), **characterized in that** it comprises:
- a flexible device (8) connected to the support bracket (6), the flexible device (8) being arranged to exert a force on the attaching carabiner (7) and to move the attaching carabiner (7) to a rest position by rotation of the attaching carabiner (7).

2. Tandem pulley (1) according to claim 1, wherein each sheave (2, 3) is configured to pivot around an axis of rotation, the axes of rotation of the sheaves and the axis of rotation of the carabiner (7) belonging substantially to one and the same plane.

3. Tandem pulley (1) according to claim 2, wherein the attaching carabiner (7) comprises a body defining a flat surface (11), the flexible device (8) exerting a force on the flat surface (11) to move the attaching carabiner (7) to the rest position.

4. Tandem pulley (1) according to claim 3, wherein the flexible device (8) is arranged on one side of the plane, the attaching carabiner (7) having a movable gate arranged on the other side of the plane.

5. Tandem pulley (1) according to one of the preceding claims, wherein the attaching carabiner (7) defines a first salient area (13) forming a first end-of-travel stop pressing on a flange of the support bracket (6) when rotation of the attaching carabiner (7) takes place from the rest position in a first direction of rotation.

6. Tandem pulley (1) according to the preceding claim, wherein the attaching carabiner (7) defines a second salient area (13) forming a second end-of-travel stop when rotation of the attaching carabiner (7) takes place from the rest position.

7. Tandem pulley according to the preceding claim in combination with claim 3, wherein the first salient area (13) and the second salient area (13) are separated by the flat surface in the direction of the axis of rotation of the attaching carabiner (7).

8. Tandem pulley according to the preceding claim, wherein the first salient area (13) and/or the second salient area (13) collaborate with a clamp (14) to prevent movement of the attaching carabiner (7) perpendicularly to the plane containing the two axes of rotation of the pair of sheaves (2, 3).

9. Tandem pulley according to one of the preceding claims, wherein the flexible device (8) applies a force on the attaching carabiner (7) that is greater than the weight of the support bracket (6).

10. Tandem pulley according to one of the preceding claims, wherein a lanyard is fixed to the attaching carabiner (7).
